# EUROPEAN PATENT SPECIFICATION

(11) **EP 1 984 415 B1**
(45) Date of publication and mention of the grant of the patent: **05.01.2011**
(21) Application number: 06735109.8
(22) Date of filing: 15.02.2006
(51) Int. Cl.: C08G 18/06, C08G 18/28, C08J 9/14, C09K 3/00

(54) **COMPATIBILIZING SURFACTANTS FOR POLYURETHANE POLYOLS AND RESINS**
VERTRÄGLICHMACHENDE TENSIDE FÜR POLYURETHANPOLYOLE UND HARZE
TENSIOACTIFS COMPATIBILISANTS POUR POLYURETHANNE POLYOLS ET RESINES

(43) Date of publication of application: 29.10.2008
(73) Proprietor: STEPAN COMPANY, Northfield, Illinois 60093 (US)
(72) Inventor: HICKEY, F. Leo, Arlington Heights, IL 60005 (US)
(74) Representative: Schnappauf, Georg
(86) International application number: PCT/US2006/005289
(87) International publication number: WO 2007/094780

(56) References cited:
- WO-A-2006/050857
- GB-A- 899 222
- US-A- 5 674 920
- US-B1- 6 313 060
- US-B1- 6 359 022
- US-B1- 6 472 446

## Description

### FIELD OF THE INVENTION

The present invention relates to rigid polyurethane/polyisocyanurate foams and to polyol based resin blends used to make such foams. In particular, the invention relates to polyol based resin blends containing a polyol, an ethoxylate propoxylate surfactant initiated by a short-chain compound, and a hydrocarbon blowing agent

### BACKGROUND OF THE INVENTION

Polyurethane and polyisocyanurate foams are produced by the reaction between a polyol and a polyisocyanate. Such foams are commonly used for thermal insulation. In a common process the polyol is incorporated into a "resin" or "B component" which typically contains a polyol or a mixture of polyols, catalysts, silicone or other cell-stabilizing surfactants, and one or more blowing agents which vaporize due to the heat of reaction, resulting in expansion of the foam. The resin may also contain water, as an additional blowing agent which functions by chemical generation of carbon dioxide during the reaction with isocyanate; flame retardants; and other additives.

In such a foam producing process, the resin blend is, importantly, phase stable, thus resisting separation into layers of different composition. The resin blend is often packaged for later sale or use, rather than being used immediately. Even if the resin blend ingredients are blended only by the end user, some time may elapse before the blend is completely consumed in the course of the normal foam process. In some cases, this elapsed time may amount to as much as several days. In either case, if the ingredients of the resin blend separate into discrete layers, the resin blend will not perform correctly in use.

In an alternative process for producing polyurethane and polyisocyanurate foams, all ingredients of the resin blend except the blowing agent are combined into one pre-blend. The blowing agent is then either added to the pre-blend and mixed as the combination is transferred to the final mixhead, as by the use of an inline mixer, or the blowing agent is added at the final mixhead itself. The isocyanate, or a mixture of isocyanate and blowing agent, along with other optionally preferred ingredients, are simultaneously transferred to the mixhead, where they are mixed with the pre-blend and discharged to produce the polyurethane or polyisocyanurate foam. Although phase stability need not be maintained for more than a few seconds in such a process, the pre-blend nevertheless ideally mixes easily and uniformly with the blowing agent.

Due to environmental legislation restricting the use of chlorofluorocarbons and hydrochlorofluorocarbons as blowing agents, hydrocarbons are being employed in increasing quantities as viable alternative blowing agents in the manufacture of rigid polyurethane or polyisocyanurate foams. Hydrocarbons, such as isomers of pentanes and butanes, are readily available and provide a cost-effective alternative to chlorofluorocarbons (CFC's), hydrochlorofluorocarbons (HCFC's), and hydrofluorocarbons (HFC's).

Unfortunately, due to the non-polar hydrophobic characteristics of hydrocarbons, they are only partially soluble in many polyols used in the manufacture of rigid polyurethane or polyisocyanurate foams. Problems can arise due to the low solubility and/or compatibility of the hydrocarbon in the polyol, the resin, or the foaming mixture consisting of resin and polyisocyanate. Low solubility in the resin can lead to stratification, with different blowing agent concentrations at various depths, or to phase separation. Stratification and separation result in material of differing compositions being fed to the mixing head of the foam machine, resulting in a loss of control of the process. Thus phase stability, that is resistance to stratification and separation, is a desirable property of the resin blend.

Low solubility of the blowing agent in the foaming mixture can also result in the development of voids in, and coarse cell structure of, the foam. Voids can be caused by vaporization of separated globules of hydrocarbon, and therefore will be more prevalent with low blowing agent solubility. Voids can also be caused by breakdown of the cellular structure of the rising foam, which appears to be exacerbated by low solubility. Voids and coarse cell structure result in inferior insulation value in the final foam product.

Increased compatibility can be evidenced by a greater degree of solubility and/or at least temporary stability of the blend of hydrocarbon with polyol or resin. It can also be evidenced by improved emulsification, with the emulsion taking the form of either a microemulsion (which may be clear or translucent) or a macroemulsion (which will appear opaque). In either case, an improved emulsion will reduce the rate of phase separation.

Many efforts have been made and much art exists in the field of rigid polyurethane and polyisocyanurate foams, with respect to additives to make hydrocarbons more compatible with standard rigid foam formulation mixtures. This invention addresses additional novel additives and mixtures of additives that render hydrocarbon blowing agents more compatible with rigid foam formulation mixtures.

U.S. Pat No. 4,751,251 (Dow Coming Corp., Midland, MI) describes a blend of silicone, organic surfactant and water or C₁ to C₃ alcohols as a generic compatibilizer package. The document claims that there is no negative effect on foam reaction catalysis, even with acid functional organic surfactant, and observes increased foam height when using these mixtures. The preferred organic surfactant is reported to be sodium dodecylbenzene sulfonate.

U.S. Pat. Nos. 5,470,501 and 5,504,125 (both to BASF Corp., Mt Olive, NJ) describe polyurethane foam formulations using a hydrocarbon C₄-C₇ blowing agent and a compatibilizer. The noted compatibilizer is an optionally alkoxylated alkyl aromatic monool or derivative.

U.S. Pat Nos. 5,488,071, 5,484,817 and 5,464,562 (all to BASF Corp., Mt. Olive, NJ) describe a method for preparing closed-cell rigid polyisocyanurate foam comprising reacting polyisocyanate and polyol having ester linkages with a C₄-C₇ hydrocarbon and a polyoxyalkylated C₈-C₂₄ alcohol additive. This additive is noted as a polyoxyalkylene polyether monool (i.e., a mono hydroxy compound) based on a Cg-C₂₄ fatty hydrocarbon with one active hydrogen atom.

U.S. Pat. No. 5,684,092 (BASF Corp., Mt Olive, NJ) describes polyurethane foams employing as blowing agents a hydrocarbon and a 1-4 carbon monool other than t-butanol.

U.S. Pat. No. 5,736,588 (Bayer Aktiengesellschaft, Leverkusen, DE) uses solution promoters of a group consisting of dialkyl carbonates, certain dicarboxylic acid esters, certain triesters of phosphoric acid, certain fatty acid/diamine reaction products, and certain quaternary ammonium salts. U.S. Pat. No. 5,578,651 (Bayer Aktiengesellschaft, Leverkusen, DE) describes similar solubilizers used in polyurethane foams employing halohydrocarbon blowing agents.

U.S. Pat. No. 5,786,400 (Sumitomo Bayer Urethane Co., Ltd.: Japan) describes the use of t-butanol as a hydrocarbon emulsifier in rigid foams. Data in Table 3 of the citation shows it to be more efficient compatibilizer than a nonylphenol ethoxylate additive or no additive.

U.S. Pat. No. 5,922,779 (Stepan Company, Northfield, III.) teaches to use a • combination of nonionic surfactants and reacted hydrophobic materials (e.g., soybean oil) as compatibilizers for hydrocarbon blowing agents.

U.S. Pat. No. 6,034,145 (Imperial Chemical Industries PLC, London, UK) teaches the use of at least two different polyoxyethylene polyether monools (e.g., ethoxylated fatty alcohols) to solubilize hydrocarbon blowing agents in polyol compositions for rigid polyurethane foams.

U.S. Pat. Nos. 6,245,826 and 6,268,402 (both to BASF Corp., Mt. Olive, NJ) describe the use of a fatty acid or fatty alcohol ethoxylate compatibilizing agent to produce isocyanate-based rigid foam using a C₄-C₆ hydrocarbon blowing agent

U.S. Pat. No. 6,420,443 (Crompton Corp., Middlebury, CT) describes a process for preparing hydrocarbon blown rigid polyurethane foam using an alkoxylated triglyceride as a compatibilizing agent.

U.S. Pat. No. 6,472,446 (BASF Corp., Mt. Olive, NJ) describes a phase stable polyol blend composition containing a sucrose and dipropylene glycol co-initiated propylene oxide polyether polyol, a polyester polyol, a compatibilizing agent and a hydrocarbon blowing agent. The compatibilizing agent is a butanol-initiated propylene oxide polyether surfactant

WO 98/42764 (Imperial Chemical Industries PLC, London, UK) discusses the use of a mixture of two different polyoxyethylene polyether monools to solubilize hydrocarbon blowing agents in resins for rigid polyurethane foams. C₁₂-C₁₅ monols with 120-180 hydroxyl values are discussed as solubilizing agents.

WO 96/12759 (Dow Chemical Company, Midland, NJ) discloses a closed-cell polyurethane foam comprising reacting in the presence of a hydrocarbon blowing agent, a polyisocyanate with a mixed polyol composition. This polyol mixture comprises a standard rigid polyol plus a compatibilizing agent containing the CₙH₂ₙ₊₁ fragment, where n is greater than or equal to 5, which contains at least one active hydrogen and not more than one aromatic group. A preferred compatibilizing agent, described in WO 96/12759, is castor oil. The compatibilizing agents may be alkoxylated derivatives of fatty oils. No criticality for alkoxylation is noted or suggested. U.S. Pat. No. 5,451,615 (Dow Chemical Company, Midland, NJ), a related patent, details compatibilizing agents which are fatty oils with hydroxyl values of 100-200.

Skowronski and Londrigan, (Jim Walter Research Inc., Birmingham, AL) SPI 29th Polyurethane Conference, 1985 page 76-83 describes foams based on surfactants prepared from castor oil ethoxylates onto which were grafted maleate and fumarate esters via free radical coupling chemistries. These surfactants were reportedly used in phenolic closed-cell foams as well as polyurethane foams and were substitutes for traditional silicone surfactants. A related patent, U.S. Pat. No. 4,529,745 (Jim Walter Research Inc., Birmingham, AL) describes surfactants which are free radical reaction products of polyoxyalkylene adducts of organic triglycerides with esterified dibasic acids that possess unsaturated C₄-C₅ diacid cores and C₈-C₁₈ alcohol derived tails. Ethoxylated castor oil and tridecyl fumarate are preferred building blocks of these grafted surfactants.

### BRIEF SUMMARY OF THE INVENTION

It has now been found that certain nonionic surfactants and blends of those surfactants are very effective in reducing the problems which stem from the low solubility or compatibility of hydrocarbon blowing agents in polyols, resins, or foaming mixtures for manufacturing isocyanate-based rigid foams.

In a first aspect, the presently described technology provides a phase stable resin blend composition comprising a polyol, a compatibilizing agent, and a hydrocarbon blowing agent. The polyol used in the resin blend of the present technology comprises at least 50 % by weight of one or more aromatic polyester polyols based on the total weight of the polyol. One example of the aromatic polyester polyols is a phthalic anhydride-initiated polyol. The compatibilizing agent used in the resin blend of the present technology comprises an ethoxylate propoxylate surfactant produced by reacting propylene oxide (PO) and ethylene oxide (EO) with an initiator selected from the group consisting of compounds having one alkylene oxide active hydrogen atom and a C₁-C₆ aliphatic or alicyclic hydrocarbon group, compounds having one alkylene oxide active hydrogen atom and a C₆-C₁₀ aryl or alkylaryl hydrocarbon group, and combinations thereof. The initiator preferably is selected from the group consisting of C₁-C₆ aliphatic or alicyclic alcohols, phenol, C₁-C₄ alkyl phenols, and combinations thereof. An example of the ethoxylate propoxylate surfactant is a butanol-initiated propylene oxide-ethylene oxide ("butanol-PO-EO") surfactant.

Alternatively, the compatibilizing agent of the present technology can further comprise an alkoxylated triglyceride adduct (e.g., a castor oil ethoxylate) and/or an alkoxylated sorbitan ester adduct (e.g., ethoxylated derivative of a sorbitan ester).

The hydrocarbon blowing agents in the composition can be C₄-C₇ aliphatic hydrocarbons, C₄-C₇ cycloaliphatic hydrocarbons, and combinations thereof. For example, pentanes have been widely used in the industry.

In another aspect, the presently described technology provides a polyurethane or polyisocyanurate foam comprising the reaction product of an isocyanate, preferably, a polyisocyanate and the resin blend of the present technology as described above.

In comparison with a resin blend and foam made without a nonionic surfactant, one or more of the following improvements can be observed when a compatibilizing agent of the present technology is added:
(1) greater compatibility of the hydrocarbon blowing agent in the resin blend;
(2) greater compatibility of the hydrocarbon blowing agent in the polyol itself, which property is often taken as a measure of the relative compatibility in the resin blend;
(3) higher phase stability of the resin blend (due to a reduced rate of separation of the hydrocarbon); and
(4) following the mixing of the resin blend and the isocyanate, better stabilization of the rising foam, as indicated by finer cells and less formation of voids.

In another aspect, the presently described technology provides a method of making a polyol based resin blend comprising providing a polyol, wherein the polyol comprises at least 50 % by weight of one or more aromatic polyester polyols based on the total weight of the polyol; providing a compatibilizing agent comprising an ethoxylate propoxylate surfactant produced by reacting propylene oxide and ethylene oxide with an initiator selected from the group consisting of compounds having one alkylene oxide active hydrogen atom and a C₁-C₆ aliphatic or alicyclic hydrocarbon group, compounds having one alkylene oxide active hydrogen atom and a C₆-C₁₀ aryl or alkylaryl hydrocarbon group, and combinations thereof; providing a hydrocarbon blowing agent; and blending the polyol, the compatibilizing agent, and the hydrocarbon blowing agent to form the resin blend.

In another aspect, the presently described technology provides a method of making a polyurethane or polyisocyanurate foam comprising providing an isocyanate; providing a polyol, wherein the polyol comprises at least 50 % by weight of one or more aromatic polyester polyols based on the total weight of the polyol; providing a compatibilizing agent comprising an ethoxylate propoxylate surfactant produced by reacting propylene oxide and ethylene oxide with an initiator selected from the group consisting of compounds having one alkylene oxide active hydrogen atom and a C₁-C₆ aliphatic or alicyclic hydrocarbon group, compounds having one alkylene oxide active hydrogen atom and a C₆-C₁₀ aryl or alkylaryl hydrocarbon group, and combinations thereof; providing a hydrocarbon blowing agent; making a mixture comprising the isocyanate, the polyol, the compatibilizing agent, and the hydrocarbon blowing agent; and reacting the mixture to produce the polyurethane or polyisocyanurate foam.

### DETAILED DESCRIPTION OF THE INVENTION

The resin blend of the present technology includes a polyol, as described herein a compatibilizing agent as described herein, and a hydrocarbon blowing agent Depending on the specific foam producing process used in production, the hydrocarbon blowing agent can be premixed with the polyol and the compatibilizing agent before production starts; be added to a pre-blend containing the polyol and the compatibilizing agent and mixed as the combination is transferred to a final mixhead, as by the use of an inline mixer; or be added at the final mixhead itself.

### Polyol Component

The polyols used in the resin blends of the present technology are compounds having two or more hydroxyl groups. They generally have a molecular weight between 50 and 12,000, more narrowly from 200 to 1,000. They may be polyether polyols, polyester polyols or other polyol compounds. Mixtures of polyols of various structures, molecular weights and/or functionalities may also be used. Further, the polyols may include reacted hydrophobic materials (e.g., soybean oil) as those described in U.S. Pat. Nos. 5,922,779 and 6,359,022 (both to Stepan Company, Northfield, III.).

The amount of the polyol component in the resin blend can be from 65 to 95 percent by weight. Preferably, the amount of polyol component is from 70 to 90 percent by weight, based on the total weight of the resin blend. More preferably, the amount of polyol component is from 75 to 85 percent by weight, based on the total weight of the resin blend. . Optionally, the polyol component can further comprise other polyols. The aromatic polyester polyols can be prepared directly interesterification of reactants which include phthalic acid based materials and a hydroxylated material. The reactants can further include a hydrophobic material.

Examples of phthalic acid based materials include phthalic acid; isophthalic acid; terephthalic acid; methyl esters of phthalic, isophthalic, or terephthalic acid; phthalic anhydride; dimethyl terephthalate; polyethylene terephthalate; trimellitic anhydride; and pyromellitic dianhydride. Examples of hydroxylated materials include ethylene glycol, diethylene glycol, triethylene glycol, propylene glycol, dipropylene glycol, trimethylene glycol, butylene glycols, 1,2-cyclohexanediol, poly(oxyalkylene) polyols derived by the condensation of ethylene oxide, propylene oxide, or any combination thereof, glycerol, 1,1,1-trimethylolpropane, 1,1,1-trimethylolethane, 2,2-dimethyl-1,3-propane diol, and pentaerythritol. Examples of hydrophobic materials include castor oil, coconut oil, corn oil, cottonseed oil, linseed oil, olive oil, palm oil, palm kernel oil, peanut oil, soybean oil, sunflower oil, tall oil, and tallow.

The aromatic polyester polyol used in the resin blend of, the present technology advantageously has an average functionality of from 1.5 to 8.0, preferably from 1.6 to 6.0, and more preferably from 1.8 to 4.0. Generally, the aromatic polyester polyol contains an amount of phthalic acid based material relative to an amount of hydroxylated material to give an average acid value of from 0 to 10 and an average hydroxyl value of from 100 to 600, more preferably from 100 to 400, and most preferably from 150 to 350, taking into account free glycols that may be present. The aromatic polyester polyol generally contains a free glycol content, based on the total weight of aromatic polyester polyol, of from 1 to 30 percent by weight, and usually from 2 to 20 percent by weight.

The polyol component can also include a polyether polyol. A particularly preferred polyether polyol is a polyoxyalkylene polyether polyol. Polyoxyalkylene polyether polyols useful in the polyol component include but are not limited to any one or more of polyoxyalkylated sucrose, polyoxyalkylated glycerol, and polyoxyalkylene glycols.

Polyoxyalkylene polyether polyols can be prepared via anionic or cationic polymerization of starting materials such as one or more alkylene oxides, preferably containing from 2 to 4 carbons in the alkylene radical. Any suitable alkylene oxide may be used, and examples include 1,3-propylene oxide, 1,2-butylene oxide, 2,3-butylene oxide, amylene oxides, styrene oxide, and, preferably, ethylene oxide and 1,2-propylene oxide and mixtures thereof. The polyoxyalkylene polyether polyols alternatively may be polymerized from other starting materials such as tetrahydrofuran, alkylene oxide-tetrahydrofuran mixtures, or epihalohydrins such as epichlorohydrin. The polyoxyalkylene polyether polyols may have either primary or secondary hydroxyl groups.

Polyoxyalkylene polyether polyols can be produced by anionic polymerization of such starting materials with alkali hydroxides as catalysts, including sodium hydroxide or potassium hydroxide, or with alkali alcoholates as catalysts, including sodium methylate, sodium or potassium ethylate, or potassium isopropylate, and, in addition to the catalysts, at least one initiator molecule containing from 2 to 8, and preferably from 3 to 8, reactive hydrogens. Polyoxyalkylene polyether polyols also can be produced by cationic polymerization of such starting materials with Lewis acids as catalysts, including antimony pentachloride or boron trifluoride etherate, or with bleaching earth as catalyst.

Included among the polyoxyalkylene polyether polyols are polyoxyalkylene glycols, such as polyoxyethylene glycol, polyoxypropylene glycol, polyoxybutylene glycol, and polytetramethylene glycol; block copolymers, such as combinations of polyoxypropylene and polyoxyethylene glycols, or poly-1,2-oxybutylene and polyoxyethylene glycols, or poly-1,4-tetramethylene and polyoxyethylene glycols; and copolymer glycols prepared from blends or sequential addition of two or more alkylene oxides. The polyoxyalkylene polyether polyols may be prepared by any known process such as, for example, the process disclosed by Wurtz in 1859 and Encyclopedia of Chemical Technology, Vol. 7, pp. 257-262, published by Interscience Publishers, Inc. (1951) or in U.S. Pat. No. 1,922,459 (I.G. Farbenindustrie Aktiengesellschaft, Frankfurt, Germany).

Preferred polyoxyalkylene polyethers include the alkylene oxide addition products of polyhydric alcohols such as ethylene glycol, propylene glycol, dipropylene glycol, trimethylene glycol, 1,2-butanediol, 1,5-pentanediol, 1,6-hexanediol, 1,7-heptanediol, hydroquinone, resorcinol, glycerol, 1,1,1-trimethylolpropane, 1,1,1-trimethylolethane, pentaerythritol, 1,2,6-hexanetriol, alphamethyl glucoside, sucrose, and sorbitol. Other useful polyhydric alcohols on which to effect alkylene oxide addition include compounds derived from phenol such as 2,2-bis(4-hydroxyphenyl)-propane, commonly known as Bisphenol A.

When included in the polyol component, the polyether polyol is combined in an advantageous ratio with the aromatic polyester polyol reaction product. The amount of polyether polyol utilized in the polyol component is determined by the requirements of the application and the physical properties required of the resulting foam. For example, in applications involving isocyanate indexes near 120, e.g., preparing typical polyurethane foams, polyether polyols can be used in an amount up to 80 percent by weight, based on the total weight of the polyol component. Conversely, in applications involving isocyanate indexes near 300, e.g., preparing typical polyisocyanurate foams, less or no polyether polyol is incorporated in the polyol component.

Other types of polyols may also be used in the polyol component Examples of other types of polyols include: thioether polyols; polyester amides, polyacetals, and aliphatic polycarbonates containing hydroxyl groups; amine terminated polyoxyalkylene polyethers; non-aromatic polyester polyols, graft dispersion polyols, and, preferably, polyester polyether polyols. Mixtures of two or more of the aforesaid polyols can be used so long as the combination produces a polyol component having an average hydroxyl number within the aforesaid range.

### Compatibilizing Agent

The compatibilizing agent used in the resin blend of the present technology contains an ethoxylate propoxylate surfactant that is produced by reacting propylene oxide and ethylene oxide with an initiator. The initiator can be one or more short-chain compounds having one alkylene oxide active hydrogen atom and a C₁-C₆ aliphatic or alicyclic hydrocarbon group or a C₆-C₁₀ aryl or alkylaryl hydrocarbon group. Suitable monofunctional initiators include, for example, aliphatic or alicyclic alcohols, secondary amines, phenol, alkyl phenols, and aliphatic or aromatic monocarboxylic acids. Preferably, the initiator is an aliphatic or alicyclic C₁-C₆ alcohol, a phenol, a C₁-C₄ alkyl phenol, or a combination thereof.

One particularly suitable initiator for the presently described technology is butanol, which will give a butanol initiated nonionic ethoxylate propoxylate compound having both propylene oxide (PO) and ethylene oxide (EO) in the alkylene oxide portion. The butanol initiated ethoxylate propoxylate surfactant can be referred to as a butanol-PO-EO surfactant.

In making the ethoxylate propoxylate surfactant used in the resin blend of the present technology, for each mole of initiator (e.g., butanol), preferably at least three moles of propylene oxide and at least one mole of ethylene oxide are used; more preferably, at least 10 to 100 moles of propylene oxide and at least 10 to 100 moles of ethylene oxide are used.

In accordance with at least one embodiment of the present application, PO and EO are reacted with the initiator separately in order to produce block polymers. For example, the initiator can react with all PO first, and then with all EO, or vice versa. For another example, by reacting the initiator with PO and EO in order repeatedly, multiple alternating blocks of PO and EO can be formed. In accordance with at least one other embodiment of the present application, PO and EO can be pre-mixed and then reacted simultaneously with the initiator to produce random copolymers.

The compatibilizing agent used in the resin blend of the present technology may contain other compatibilizers (either now known or to be discovered) that can improve the solubility of hydrocarbon blowing agents in polyol compositions. For example, the compatibilizing agent used in the resin blend of the present technology can be a blend of the alcohol initiated ethoxylate propoxylate surfactant with an alkoxylated triglyceride adduct and/or an alkoxylated sorbitan ester adduct

The manufacture and application of alkoxylated triglyceride adducts are known in the art, and are described, for example, in U.S. Pat No. 6,420,443 (Clark et al.). Examples of alkoxylated triglyceride adducts illustrated in U.S. Pat. No. 6,420,443 include a variety of castor oil ethoxylates. The alkoxylation level of the alkoxylated triglyceride adduct is not important for the present technology. In accordance with at least one embodiment, the alkoxylation level is within the range of from 5 to 100 moles alkylene oxide (e.g., ethylene oxide) per mole triglycerides (e.g., those from castor oil).

As known to a person of ordinary skill in the art, an alkoxylated sorbitan ester adduct can be easily produced by reacting a precursor sorbitan ester with alkylene oxide (e.g., ethylene oxide). The precursor ester of the alkoxylated sorbitan ester adduct can be a mono-, di-, or triester of sorbitol, sorbitan, or a mixture thereof with any C₁₂-C₂₀ fatty acid or a mixture of C₁₂-C₂₀ fatty acids. Examples of alkoxylated sorbitan ester adducts include ethoxylated sorbitan triesters of tall oil fatty acids. The alkoxylation level of the alkoxylated sorbitan ester adducts is not important for the present technology. In accordance with at least one embodiment, the alkoxylation level is within the range of from 2 to 50 moles alkylene oxide (e.g., ethylene oxide) per mole precursor sorbitan ester (e.g., sorbitan triesters of tall oil fatty acids).

A series of alkoxylated sorbitan esters is available from Stepan Company (Northfield, III.) under the trade names Toximul^{®} SEE-340 and SEE-341. Use of these kinds of materials alone as compatibilizers in resins is described, for example, in S. N. Singh et al., Proceedings of the Polyurethanes World Congress '97, Methods of Increasing the Solubility of Hydrocarbons and HFC's in Polyurethane Raw Materials and the Effects on the Performance and Processing Characteristics of Construction Foams, p. 136.

The overall amount of the compatibilizing agent can be from 2 to 30 % by weight; alternatively from 5 to 20 % by weight, based on the total weight of the polyol component and the compatibilizing agent.

It has been observed that the compatibilizing agent used in the resin blend of the present technology can increase the compatibility of a hydrocarbon blowing agent in a resin blend; increase the compatibility of a hydrocarbon blowing agent in a polyol itself, which property is often taken as a measure of the relative compatibility in a resin blend made from the polyol; increase the phase stability of a resin blend (due to a reduced rate of separation of the hydrocarbon to form a separate phase); and/or following the mixing of the resin blend and the isocyanate, better stabilize the rising foam, as indicated by finer cells and less formation of voids.

### Blowing Agent

The resin blend of the present technology also contains a hydrocarbon blowing agent, preferably an aliphatic or cycloaliphatic C₄-C₇ hydrocarbon blowing agent. Such aliphatic or cycloaliphatic C₄-C₇ hydrocarbons have a boiling point of 70° C. or less at 1 atmosphere, and preferably have a boiling point of 50° C. or less at 1 atmosphere. The hydrocarbon blowing agent is physically active and has a boiling point sufficiently low so as to evaporate and become gaseous at the exothermic temperatures caused by the reaction between the isocyanate and polyols. The vaporizing hydrocarbon blowing agent provides foaming action within the resulting polyurethane matrix. The hydrocarbon blowing agents consist exclusively of carbon and hydrogen and are therefore non-halogenated by definition. Exemplary C₄-C₇ hydrocarbon blowing agents include, alone or in combination: linear or branched alkanes, such as butane, isobutane, 2,3-dimethylbutane, n-pentane, isopentane, technical-grade pentane mixtures, n-hexane, isohexane, n-heptane, isoheptane, or mixtures thereof; alkenes, such as 1-pentene, 2-methylbutene, 3-methylbutene, 1-hexene, or mixtures thereof; and cycloalkanes, such as cyclobutane, cyclopentane, cyclohexane or mixtures thereof. Preferred C₄-C₇ hydrocarbon blowing agents include cyclopentane, n-pentane, isopentane, and mixtures thereof.

Other blowing agents can be used in conjunction with C₄-C₇ hydrocarbon blowing agents. Such auxiliary blowing agents may be divided into the classes of: (1) chemically active blowing agents, which chemically react with isocyanate or other formulation ingredients to produce a gas that subsequently is liberated, thereby generating foaming action; and (2) physically active blowing agents which are gaseous at or below the exothermic foaming temperatures, thereby providing a blowing gas without the need to chemically react with the foam ingredients. Included within the meaning of physically active blowing agents are decomposition-type materials that are thermally unstable and which decompose at elevated temperatures, releasing a gas.

Preferred auxiliary chemically active blowing agents are those which react with isocyanate to liberate a gas such as CO₂. Suitable chemically active blowing agents include, but are not limited to, water, mono- and polycarboxylic acids having a molecular weight of from 46 to 300, salts of such polycarboxylic acids, and tertiary alcohols.

Water can be classed and used as a chemically active blowing agent because water reacts with isocyanate to produce and liberate CO₂ gas, the actual resulting blowing agent. However, because water consumes isocyanate groups, using water as a chemically active blowing agent requires adding an equivalent molar excess of isocyanate to compensate for the amount of isocyanates consumed by the water.

More information about auxiliary chemically active blowing agents and auxiliary physically active blowing agents for use in combination with the hydrocarbon blowing agents can be found in U.S. Pat. No. 6,359,022 (Stepan Company, Northfield, III.).

The total and relative amounts of blowing agents will depend upon the desired foam density, the type of hydrocarbon, and the amount and type of additional blowing agents employed. Polyurethane foam densities typical of products destined for rigid polyurethane insulation applications encompass free rise densities of from 20.8 to 40.0 kg/m³ (from 1.3 to 2.5 pounds per ft³ (pcf)), preferably from 20.8 to 33.6 kg/m³ (from 1.3 to 2.1 pcf), and overall molded densities of from 24.0 to 48.1 kg/m³ (from 1.5 to 3.0 pcf).

The total amount of blowing agent, based on the weight of all foaming ingredients (i.e., the resin blend and the isocyanate), is preferably from 3 to 15 percent by weight. The amount of hydrocarbon blowing agent, based on the weight of all foaming ingredients, is preferably from 3 to 15 percent by weight, and more preferably from 5 to 10 percent by weight.

The weight amount of all blowing agents in the resin blend is generally from 5 to 35 parts by weight per hundred parts of all polyols and the compatibilizing agent (php), and preferably from 10 to 30 php. The amount of hydrocarbon blowing agent in the resin blend of the presently described technology is from 1 to 35 percent by weight, alternatively from 5 to 30 percent by weight, based on the total weight of the resin blend. Most preferably, the amount of hydrocarbon blowing agent is from 10 to 20 percent by weight, based on the total weight of the resin blend. As described above, the hydrocarbon blowing agent in the resin blend may be augmented with auxiliary chemically active blowing agents and/or physically active blowing agents.

A minor quantity of water may be found in polyols as a byproduct of reaction, and such water may be sufficient to act as a lone auxiliary chemically active blowing agent. Optionally, however, water may be added to the resin blend in an amount of from 0.05 to 5 php, and preferably from 0.25 to 1.0 php. Other auxiliary chemically active blowing agents may be employed instead of, or in addition to, water. Auxiliary physically active blowing agents also may be employed instead of, or in addition to, auxiliary chemically active blowing agents.

The blowing agent may be added and incorporated into the polyol blend for storage and later use in a foaming apparatus or may be added to a preblend tank in the foaming apparatus and incorporated in the polyol blend prior to pumping the foaming ingredients to the mixhead. Alternatively, the blowing agent may be added to the preblend and mixed as the combination is transferred to the final mixhead, as by the use of an inline mixer, or it may be added to the foaming ingredients in the mixhead as a separate stream.

### Other Optional Ingredients

Optionally preferred ingredients include cell-stabilizing surfactants, flame retardants, and catalysts.

### A. Cell-stabilizing Surfactants

The resin blends of the presently described technology optionally contain cell-stabilizing surfactants. Examples of cell-stabilizing surfactants include but are not limited to Niax Silicone L-6900, available commercially from GE Silicones (Friendly, WV); Dabco DC-5598 silicone surfactant, available commercially from Air Products and Chemicals, Inc. (Allentown, PA); Tegostab B 8512 silicone surfactant, available commercially from Goldschmidt Chemical Corp. (Essen, Germany); and Vorasurf 504, a non-silicone surfactant available from Dow Chemical Co. (Midland, Michigan). Cell-stabilizing surfactants, if employed, are preferably added to the resin blend in an amount of from 0.5 to 5 php, and more preferably from 1 to 3 php. The amount of cell-stabilizing surfactant based on the weight of all foaming ingredients is preferably from 0.2 to 2.5 percent by weight, and more preferably from 0.4 to 1.5 percent by weight

### B. Flame Retardants

Flame retardant additives may be added to achieve foams having a particular flame retardancy classification. Preferred flame retardants are solid or liquid compounds containing one or more of the elements phosphorus, chlorine, bromine, and boron. Examples of flame retardants include but are not limited to tris-(2-chloro isopropyl) phosphate, tetrakis-(2-chloro ethyl) ethylene diphosphate, tris-(beta-chloro ethyl) phosphate, and tris-(2,3-dibromo propyl) phosphate. Tris-(2-chloro isopropyl) phosphate is a particularly preferred flame retardant Flame retardants, if employed, are added to the resin blend in an amount of from 2 to 50 php, and preferably from 5 to 25 php. The amount of flame retardant based on the weight of all foaming ingredients is from 1 to 25 percent by weight, and preferably from 2 to 12 percent by weight.

### C. Catalysts

The resin blends of the invention optionally contain catalysts to accelerate the reaction with the polyisocyanate. Suitable catalysts include but are not limited to salts of organic carboxylic acids, for example sodium salts, ammonium salts, and preferably potassium salts. Examples include trimethyl-2-hydroxypropyl ammonium formate, trimethyl-2-hydroxypropyl ammonium octanoate, potassium formate, potassium 2-ethylhexanoate, and potassium acetate. Tin (II) salts of organic carboxylic acids are often used as catalysts as well, which include, for example, tin (II) acetate, tin (II) octoate, tin (II) ethylhexanoate and tin (II) laurate, and the dialkyltin (IV) salts of organic carboxylic acids, e.g., dibutyltin diacetate, dibutyltin dilaurate, dibutyltin maleate, and dioctyltin diacetate.

The organic metal compounds can be used alone or preferably in combination with strongly basic amines. Tertiary amines are often used to promote urethane linkage formation and the reaction of isocyanate with water to generate carbon dioxide. Tertiary amines include but are not limited to triethylamine, 3-methoxypropyldimethylamine, triethylenediamine, pentamethyldiethylenetriamine, and bis(dimethylaminopropyl)urea.

Other examples which may be mentioned are amines such as 2,3-dimethyl-3,4,5,6-tetrahydropyrimidine or tertiary amines such as triethylamine; tributylamine; dimethylbenzylamine; N-methylmorpholine; N-ethylmorpholine; N-cyclohexylmorpholine; N,N,N',N'-tetramethylethylenediamine; N,N,N',N'-tetramethylbutanediamine; N,N,N',N'-tetramethylhexane-1,6-diamine; pentamethyldiethylenetriamine; bis(dimethylaminoethyl)ether; bis(dimethylaminopropyl)urea; dimethylpiperazine; 1,2-dimethylimidazole; 1-azabicyclo(3,3,0)octane and preferably 1,4-diazabicyclo(2,2,2)octane. Additionally, one can use alkanolamine compounds such as triethanolamine; triisopropanolamine; N-methyldiethanolamine and N-ethyldiethanolamine and dimethylethanolamine.

Particularly preferred catalysts include potassium 2-ethylhexanoate, available commercially from Air Products and Chemicals under the tradename Dabco K-15 Catalyst; pentamethyldiethylenetriamine, available commercially from Air Products and Chemicals under the tradename Polycat 5 Catalyst; and dimethylcyclohexylamine, available commercially from Air Products and Chemicals under the tradename Polycat 8 Catalyst.

Additional suitable catalysts include tris(dialkylaminoalkyl)-s-hexahydrotriazines, in particular tris(N,N-dimethylaminopropyl)-s-hexahydrotriazine; tetraalkylammonium hydroxides such as tetramethylammonium hydroxide; alkali metal hydroxides such as sodium hydroxide and alkali metal alkoxides such as sodium methoxide and potassium isopropoxide and also alkali metal salts of longchain fatty acids having from 10 to 20 carbon atoms and possibly lateral OH groups in combinations of the organic metal compounds and strongly basic amines.

Catalysts, if employed, are added to the resin blend in an amount of from 0.5 to 10 php, and preferably from 1 to 8 php. The amount of catalyst based on the weight of all foaming ingredients is from 0.5 to 5 percent by weight, and preferably from 1 to 4 percent by weight.

The resin blend of the present technology can be mixed with an isocyanate to produce a polyurethane or polyisocyanurate foam.

The isocyanate component is preferably a polyisocyanate, herein defined as having two or more isocyanate functionalities. Examples of these include conventional aliphatic, cycloaliphatic, and preferably aromatic isocyanates. Specific examples include: alkylene diisocyanates with 4 to 12 carbons in the alkylene radical such as 1,12-dodecane diisocyanate, 2-ethyl-1,4-tetramethylene diisocyanate, 2-methyl-1,5-pentamethylene diisocyanate, 1,4-tetramethylene diisocyanate and 1,6-hexamethylene diisocyanate; cycloaliphatic diisocyanates such as 1,3- and 1,4-cyclohexane diisocyanate as well as any mixtures of these isomers, 1-isocyanato-3,3,5-trimethyl-5-isocyanatomethylcyclohexane (isophorone diisocyanate), 2,4- and 2,6-hexahydrotoluene diisocyanate and the corresponding isomeric mixtures 4,4'-2,2'-and 2,4'-dicyclohexylmethane diisocyanate as well as the corresponding isomeric mixtures and preferably aromatic diisocyanates and polyisocyanates such as 2,4- and 2,6-toluene diisocyanate and the corresponding isomeric mixtures, and 2,2'-diphenylmethane diisocyanate and the corresponding isomeric mixtures, mixtures of 4,4'-, 2,4'-, and 2,2-diphenylmethane diisocyanates and polyphenylene polymethylene polyisocyanates (crude MDI).

In one embodiment, the polyisocyanate component used in conjunction with the resin blend of the present technology is a polymeric diphenylmethane diisocyanate (MDI) having a nominal functionality of approximately 3, and an NCO content of approximately 31 weight percent.

Generally, the isocyanate and the resin blend are combined at an isocyanate index of from 80 to 1000, alternatively from 100 to 400. A preferred isocyanate index for polyurethane foams is within the range of from 100 to 150; a preferred isocyanate index for polyisocyanurate foams is within the range of from 200 to 300. When the isocyanate index is within the range of from 150 to 200, foams with characteristics intermediate between polyurethane foams and polyisocyanurate foams are produced.

The rigid polyurethane/polyisocyanurate foam is typically a fine, closed-cell foam material with ample bulk physical integrity and self-supporting character to be used as laminated building panels, structural components in appliances, etc. This foam also often must possess high thermal resistance and high insulation properties with only a relatively slow increase in thermal conductivity over time. It may also be required to be low in friability, high in compressive strength, and have low flammability.

The presently described technology and its advantages will be better understood by reference to the following examples. These examples are provided to describe specific embodiments of the present technology. By providing these specific examples, the inventors do not limit the scope and spirit of the present technology. It will be understood by those skilled in the art that the full scope of the presently described technology encompasses the subject-matter defined by the claims appending this specification, and any alterations, modifications, or equivalents of those claims.

### Materials Used In The Examples

The main materials used in the examples to be discussed below are as follows:
Surfactant 1: Produced by reacting 1 mole of butanol with 50 moles of propylene oxide and 56 moles of ethylene oxide.
Surfactant 2: Produced by reacting 1 mole of a sorbitan triester of tall oil fatty acids with 20 moles of ethylene oxide.
Surfactant 3: Produced by reacting 1 mole of castor oil with 36 moles of ethylene oxide.
Surfactant 4: Produced by reacting 1 mole of castor oil with 16 moles of ethylene oxide.
Surfactant 5: Produced by reacting 1 mole of tridecyl alcohol with 12 moles of ethylene oxide.

Ortegol^{®} 410 is a compatibilizer provided by Degussa Corporation (Parsippany, New Jersey), which is claimed in U.S. Patent 6,472,446 (BASF Corp., Mt. Olive, NJ) to be a butanol-initiated propylene oxide polyether surfactant. The butanol in Ortegol^{®} 410 is propoxylated only (i.e., not ethoxylated).

Polyol A: Polyol A used in the examples was a polyester polyol that had a hydroxyl value of 236, an acid value of 1.1, and reacted soybean oil content of 8.03%. To make Polyol A according to the method described in U.S. Pat. No. 5,922,779 (Stepan Company), 3,495 g. of phthalic anhydride, 4,285 g. of diethylene glycol, and 1.6 g. of tetrabutyl titanate are combined in a 12-liter reaction flask and reacted at 210° C. to produce a polyol with a hydroxyl value of 257 and an acid value of 1.0. Then 642 g. soybean oil is added, and the mixture is maintained at 210° C for 4 hours (hr.) with stirring, to effect interesterification. The resulting polyol has a hydroxyl value of 236, an acid value of 1.1, and reacted soybean oil content of 8.03%.

Polyol B: Polyol B used in the examples was another polyester polyol, which had a hydroxyl value of 262, an acid value of 1.1, and reacted soybean oil content of 8.33%. To make Polyol B according to the method described in U.S. Pat. No. 5,922,779 (Stepan Company), 3,356 g. of phthalic anhydride, 4,384 g. of diethylene glycol, and 1.6 g. of tetrabutyl titanate are combined in a 12-liter reaction flask and reacted at 210° C. to produce a polyol with a hydroxyl value of 286 and an acid value of 1.0. Then 666 g. soybean oil is added, and the mixture is maintained at 210° C for 4 hr. with stirring, to effect interesterification. The resulting polyol has a hydroxyl value of 262, an acid value of 1.1, and reacted soybean oil content of 8.33%.

Voranol^{®} 360 is a polyether polyol based on sucrose/glycerol as initiator, provided by Dow Chemical Company (Midland, Michigan).

Fyrol^{®} CEF is tris-(beta-chloroethyl) phosphate, a flame retardant provided by Akzo Nobel Chemicals, Inc. (Dobbs Ferry, NY).

Pel-Cat^{®} 9540A is potassium 2-ethylhexanoate, a catalyst provided by Pelron Corporation (Lyons, IL).

PMDETA is pentamethyl diethylene triamine.

Tegostab^{®} B-8512 is a silicone surfactant provided by Goldschmidt Chemical Corporation (Essen, Germany).

Mondur^{®} 489 is a polymeric isocyanate provided by Bayer Corporation (Pittsburgh, PA).

In the examples and tests described below, Polyol A was used for the comparative examples and Polyol B was used in the examples of the present technology to blend with the nonionic surfactants used in the resin blend of the present technology. The reason for using two different polyols was to achieve approximately the same hydroxyl value for the polyol/surfactant blends in the examples of the present technology as was present in the comparative examples. Other than the hydroxyl values, the two polyester polyols used in the examples were essentially equivalent.

### Examples 1-8: Blowing Agent Compatibility In Polyol Or Polyol/Surfactant Blends

The compatibility of n-pentane, which is a widely used hydrocarbon blowing agent, in polyol was tested in Examples 1-8 (see Table 1). Examples 1 through 6 utilized polyester polyol alone, whereas Examples 7 and 8 contained both polyester and polyether polyols. Example 1 is a comparative example testing Polyol A without the addition of any compatibilizing agent. Example 2 is another comparative example testing Polyol B (90 parts by weight) with the addition of compatibilizer Ortegol^{®} 410 (10 parts by weight). Example 7 is also a comparative example in this group testing a mixture of Polyol B (60 parts by weight) and Voranol^{®} 360 (40 parts by weight) without the addition of any compatibilizing agent. In Examples 3-6, 90 parts by weight of Polyol B were mixed with 10 parts by weight of Surfactant 1 or a mixture of Surfactant 1 with one of Surfactants 2-4. In Example 8, a mixture of 54 parts by weight of Polyol B and 40 parts by weight of Voranol^{®} 360 was mixed with 6 parts by weight of Surfactant 1.

The procedure of measuring the blowing agent compatibility in the polyol or polyol/surfactant blends included the following steps: adding a weighed amount of polyol or blend to a jar; adding the blowing agent in portions, with mixing after each; observing the mixture for signs indicative of degrees of incompatibility/compatibility (bluish color, haze, or opacity) after each addition of the blowing agent was mixed in; and noting the weight of the blowing agent (after stirring) and the clarity after each addition. Without limiting the scope of the term or the invention hereof, for the purpose of this test, an assessment of a degree of compatibility was identified with respect to the maximum amount of blowing agent which produces a semi-transparent haze - just less than the amount resulting in opacity. It is expressed in parts of blowing agent per hundred parts of the polyol or polyol/surfactant blend, and is determined to the nearest part per hundred. The results are shown in Table 1.

**Table 1. Polyol and Polyol/Surfactant Compatibility Tests**

| | Example 1* | Example 2* | Example 3 | Example 4 | Example 5 | Example 6 | Example 7* | Example 8 |
|---|---|---|---|---|---|---|---|---|
| Polyol A | 100.00 | ----- | ----- | ----- | ----- | ----- | ----- | ----- |
| Polyol B | ---- | 90.00 | 90.00 | 90.00 | 90.00 | 90.00 | 60.00 | 54.00 |
| Voranol^{®} 360 | ----- | ----- | ----- | ----- | ----- | | 40.00 | 40.00 |
| Surfactant 1 | ----- | ----- | 10.00 | 5.00 | 5.00 | 5.00 | ----- | 6.00 |
| Surfactant 2 | ---- | ---- | ----- | 5.00 | --- | ---- | ----- | ----- |
| Surfactant 3 | ----- | ----- | ----- | ----- | 5.00 | ----- | ----- | ----- |
| Surfactant 4 | ----- | ----- | ----- | ----- | ---- | 5.00 | ----- | ----- |
| Ortegol^{®} 410 | ---- | 10.00 | ----- | ----- | ----- | ----- | ----- | ----- |
| Compatibility of n-pentane (parts) | 5 | 1 | 18 | 9 | 14 | 9 | 4 | 6 |

| | | | | | | | | |
|---|---|---|---|---|---|---|---|---|
| * Comparative Examples | | | | | | | | |

In the blends utilizing a polyester polyol (Polyol A or B) alone, comparison of Examples 1 and 3 shows that the use of only 10% by weight of Surfactant 1 based on the total weight of the polyol/surfactant blend significantly increased the compatibility of n-pentane in the polyol from 5 parts to 18 parts. Examples 2 and 3 showed that Surfactant 1 worked much better than the commercially available Ortegol^{®} 410 compatibilizer to improve the compatibility of n-pentane in Polyol B. A mixture of Surfactant 1 with Surfactant 2, 3, or 4 also increased the blowing agent compatibility.

In the examples containing both polyester and polyether polyols, Example 8, with Surfactant 1, showed improved compatibility over Example 7, with no compatibilizer.

### Examples 9-16: Blowing Agent Compatibility In Resin Blends

Examples 9-16 (Table 2) tested the compatibility of n-pentane in resin blends that included polyol and some commercially available ingredients commonly used in resin blends for producing polyurethane/polyisocyanurate foams. Examples 9 through 14 utilized a polyester polyol (Poly A or B) as the sole polyol, whereas Examples 15 and 16 contained both polyester and polyether polyols. Example 9 is a comparative example, in which the resin blend did not include any compatibilizing agent. Example 10 is another comparative example, which included 90 parts by weight of Polyol B and 10 parts by weight of Ortegol^{®} 410 in the resin blend. Example 15 is also a comparative example, which used a mixture of Polyol B and Voranol^{®} 360 but did not include any compatibilizing agent in its resin blend. Examples 11-14 used Surfactant 1 or a mixture of Surfactant 1 and one of Surfactants 2-4 as the compatibilizing agent. Example 16 was based on a mixture of Polyol B and Voranol^{®} 360 and included Surfactant 1 in its resin blend. The formulations of the resin blends of Examples 9-16 are recorded in Table 2.

**Table 2. Resin Compatibility Tests**

| | Example 9* | Example 10* | Example 11 | Example 12 | Example 13 | Example 14 | Example 15* | Example 16 |
|---|---|---|---|---|---|---|---|---|
| Resin Premix Composition: | | | | | | | | |
| Polyol A | 100.00 | ---- | ----- | ----- | ---- | ----- | ----- | ----- |
| Polyol B | ----- | 90.00 | 90.00 | 90.00 | 90.00 | 90.00 | 60.00 | 50.00 |
| Voranot^{®} 360 | | ----- | | ----- | ----- | ---- | 40.00 | 40.00 |
| Surfactant 1 | ----- | ----- | 10.00 | 5.00 | 5.00 | 5.00 | --- | 10.00 |
| Surfactant 2 | ----- | ----- | ----- | 5.00 | ----- | ----- | ----- | ----- |
| Surfactant 3 | ----- | ----- | ----- | ----- | 5.00 | ----- | ----- | ----- |
| Surfactant 4 | | ----- | ----- | ----- | ----- | 5.00 | ----- | ----- |
| Orngol^{®}410 | ----- | 10.00 | ----- | ----- | ----- | ----- | ----- | ----- |
| Fyrol CEF | 10.00 | 10.00 | 10.00 | 10.00 | 10.00 | 10.00 | 10.00 | 10.00 |
| Pelcat 9540-A | 3.25 | 3.40 | 3.25 | 3.25 | 3.25 | 3.25 | 3.40 | 3.40 |
| PMDETA | 0.20 | 0.20 | 0.20 | 0.20 | 0.20 | 0.20 | 0.20 | 0.20 |
| Tegostab B-8512 | 2.00 | 2.00 | 2.00 | 2.00 | 2.00 | 2.00 | 2.00 | 2.00 |
| Water | 0.50 | 0.50 | 0.50 | 0.50 | 0.50 | 0.50 | 0.50 | 0.50 |
| Total | 115.95 | 116.10 | 115.95 | 115.95 | 115.95 | 115.95 | 116.10 | 116.10 |
| Compatibility of n-pentane (parts) | 7 | 3 | 12 | 14 | 10 | 13 | 5 | 7 |

| | | | | | | | | |
|---|---|---|---|---|---|---|---|---|
| * Comparative Examples | | | | | | | | |

To measure the blowing agent compatibility in the resin, all of the ingredients except the blowing agent were added to a jar, and mixed; and then the procedure outlined in the polyol compatibility test above was followed. The limit of compatibility in this test is also expressed in parts per hundred polyol or polyol/nonionic surfactant blend, and is determined to the nearest part per hundred. The results are shown in Table 2.

Comparing Examples 11-14 to Examples 9-10, the results show that the compatibilizing agent consisting either solely or partially of the butanol-PO-EO surfactant described herein substantially improved the compatibility of n-pentane in the resin blends and performed much better than the commercially available Ortegol^{®} 410 compatibilizer. In Examples 15 and 16 that utilized blends of polyester and polyether polyols, the formulation of Example 16 with the butanol-PO-EO surfactant likewise compatibilized more n-pentane than the formulation of Example 15 without this surfactant.

### Examples 17-23: Resin Stability and Foam Stabilization Tests

In Examples 17-23 (Table 3), resin blends were formulated, and then reacted with a polymeric isocyanate to make foams. To investigate the contribution of the compatibilizing agent used in the resin blend of the present technology to the stabilization of the rising foam, these foams were made using an unusually low silicone level. The level chosen was that giving minimal foam stabilization, just sufficient to prevent the onset of foam collapse during foaming. The stability of the resin blends and the reactivity of the resin blends with the polymeric isocyanate were tested. Some of the physical properties of the foams were also observed or measured in these examples.

Examples 17 and 18 are the comparative examples in this group. The resin blend of Example 17 used Polyol A and did not contain any compatibilizing agent. The resin blend of Example 18 used 90 parts by weight of Polyol B and 10 parts by weight of the commercially available compatibilizers, Ortegol^{®} 410. The formulations of the resin blends of Examples 17-23 are shown in Table 3.

Resin Stability To test the phase stability of a resin blend, resin components were combined in a beaker and mixed approximately 1 minute with a motor-driven mixing blade rotating at 3600 rpm, placed in a capped jar, and placed in a constant-temperature bath at 20° C. After 3 hours the jar was removed, and the depth of the layer of clear or nearly clear blowing agent at the top was measured with a machinist's rule. This depth is expressed as a percentage of the total depth of the material in the jar.

Reactivity Test To test the reactivity of a resin blend with a polymeric isocyanate, amounts of the resin and the polymeric isocyanate to give 300 g of total mix were combined in a 0.91kg (32-oz.) paper cup at 20° C, mixed for 8 sec. with a motor-driven mixing blade rotating at 3600 rpm, poured into a 4,68kg (165-oz.) paper cup, and allowed to rise. Cream time (initiation of rise) and gel time (time at which strings of polymer can be drawn from the reacting mass) were observed. The density was calculated from the weight of the foam remaining in the body of the cup after the foam protruding above the top edge of the cup was cut off.

Cell Structure And Void Depth The foam-containing cup resulting from the reactivity test was cut vertically through the center, and the foam observed. Cell structure was judged on the basis of the relative average size of the cells. The reduced-silicone formulations used resulted in the formation of a void at the bottom of the cup, extending over most or all of the area of the bottom surface. The average depth of this void was measured with a ruler, and expressed in mm (eighths of an inch).

The results of Examples 17-23 are recorded in Table 3.

**Table 3. Resin Stability and Foam Stabilization Tests**

| | Example 17* | Example 18* | Example 19 | Example 20 | Example 21 | Example 22 | Example 23 |
|---|---|---|---|---|---|---|---|
| Resin Composition, pphp: | | | | | | | |
| Polyol A | 100.00 | ---- | ----- | --- | ----- | ----- | ----- |
| Polyol B | ----- | 90.00 | 90.00 | 90.00 | 90.00 | 90.00 | 90.00 |
| Surfactant 1 | ----- | ---- | 10.00 | 5.00 | 5.00 | 5.00 | 5.00 |
| Surfactant 2 | ----- | ----- | ----- | 5.00 | ----- | ----- | ----- |
| Surfactant 3 | ----- | ----- | ----- | ----- | 5.00 | ----- | ----- |
| Surfactant 4 | ----- | ----- | ----- | ----- | ----- | 5.00 | ----- |
| Surfactant 5 | ----- | ----- | ----- | ----- | ----- | ----- | 5.00 |
| Ortegol 410 | ----- | 10.00 | ----- | ----- | ----- | ----- | ----- |
| Fyrol CEF | 10.00 | 10.00 | 10.00 | 10.00 | 10.00 | 10.00 | 10.00 |
| Pelcat 9540-A | 4.50 | 3.40 | 3.25 | 3.25 | 3.40 | 3.40 | 3.40 |
| PMDETA | 0.20 | 0.20 | 0.20 | 0.20 | 0.20 | 0.20 | 0.20 |
| Tegostab B-8512 | 0.20 | 0.20 | 0.20 | 0.20 | 0.20 | 0.20 | 0.20 |
| Water | 0.50 | 0.50 | 0.50 | 0.50 | 0.50 | 0.50 | 0.50 |
| n-pentane | 21.60 | 22.50 | 22.30 | 22.30 | 22.30 | 22.30 | 22.30 |
| Total resin | 137.00 | 136.80 | 136.45 | 136.45 | 136.60 | 136.60 | 136.60 |
| Mondur 489 | 192.28 | --- | 189.26 | 191.27 | 191.71 | 191.71 | 191.71 |
| Index | 275 | ---- | 275 | 275 | 275 | 275 | 275 |
| Reactivity test | | | | | | | |

| observations: | | | | | | | |
|---|---|---|---|---|---|---|---|
| Gel time (sec) | 49 | ----- | 50 | 47 | 43 | 43 | ----- |
| Foam density (kg/m³ (lb/cu.ft.)) | 29.8 (1.86) | ----- | 27.7 (1.73) | 28.2 (1.76) | 28.4 (1.77) | 29.6 (1.85) | 27.9 (1.74) |
| Cell structure | very coarse | --- | coarse | coarse | coarse | coarse | coarse |
| Average void depth (mm (8ths of an inch)) | 16 (5) | ----- | 10 (3) | 6 (2) | 6 (2) | 8(2.5) | 10 (3) |
| Separation in resin, 20° C (volume %, 3 hr.) | 2 | 9 | trace | 1 | trace | 1 | 1 |

| | | | | | | | |
|---|---|---|---|---|---|---|---|
| * Comparative Examples | | | | | | | |

As shown in Table 3, the foams of Examples 19-23 had improved cell structure over that of the comparative Example 17, in that the cell structure rating improved from "very coarse" to "coarse". These ratings are in comparison to cell structures obtained at much higher silicone levels normally used in foam production. The very low silicone level used in Examples 17-23 resulted in relatively poor cell structure, but was employed to allow the effect of the surfactants used in the resin blend of the present technology on cell structure to be readily seen. Effects were also evident in the average void depth, where greater void depth is interpreted as indicating less stability of the foam during the rise. Here also, Examples 19-23 showed improvement over Example 17. In both of these tests, therefore, the compatibilizing agents used in the resin blend of the present technology were observed to contribute to a more uniform and finer-celled foam.

Separation in the resin is also reported in Table 3. Examples 19-23, with surfactants used in the resin blend of the present technology, displayed reduced separation on standing compared with Example 17 without compatibilizing surfactant Example 18, with Ortegol^{®} 410 as compatibilizer, actually showed faster separation than Example 17. A slower rate of separation of the resin increases the length of time that the resin can be used to make foam of uniform density throughout a production run, especially in processes where agitation of the resin after incorporation of the blowing agent is low or absent.

### Examples 24-25: Foaming and Physical Properties Tests

In Examples 24-25, resin blends were prepared with normal silicone levels, and foams were made from them. Examples 24 and 25 utilized resin blends of Polyol B that contained a mixture of Surfactants 1 and 2 or Surfactants 1 and 3. The formulations of the resin blends of Examples 24-25 are shown in Table 4.

Reactivities of the resin blends of Examples 24-25 and some physical properties of the foam produced from the resin blend of Example 24 were tested in these examples.

The method for testing the resin reactivity was the same as that described above for Examples 17-23.

Foam Molding To produce foam samples for testing molded foam properties, the resin and the isocyanate were combined and mixed in the same way as for the reactivity test, and immediately poured into a 5.1x33.0x63.5cm (2 x 13 x 25-inch) rectangular mold, the surfaces of which were maintained 51.7°C at (125° F). The 5.1 cm (2-inch) dimension was oriented vertically. The minimum quantity of foaming mix required to fill the mold was used. After 15 minutes the foam panels were removed from the mold and placed in an oven at 93.3°C (200° F) for 24 hours to complete curing. Blocks were cut from the interiors of the panels to be used as test pieces.

Compressive Strength The procedure used for measuring compressive strength followed the ASTM D-1621 method. In accordance with this method, test pieces of 5.1x 5.1x 2.5cm (2 x 2 x 1 inch) were cut from the interiors of the test panels in such a way that the compressive force could be applied in each of the three directions specified. Directions were indicated with reference to the rise 5.1-cm (2-inch)) direction. Compressive strengths were determined on a testing machine. Compressive strength was defined as the maximum force per unit area (kPa (lb/sq. in., or psi)) indicated at a deflection of 10% or less.

K Factor The procedure used for measuring K factors followed the ASTM C-518 method. Test pieces of 27.9 x 27.9 x 3.2 cm (11 x 11 x 1.25 inches) were cut from the interiors of the test panels, and K factors were measured on a LaserComp Heat Flow Meter instrument (LaserComp, Saugus, MA).

The test results of Examples 24-25 are recorded in Table 4.

**Table 4. Foaming and Physical Properties Tests**

| | Example 24 | Example 25 |
|---|---|---|
| Resin Composition, pphp: | | |
| Polyol A | | ----- |
| Polyol B | 90.00 | 90.00 |
| Surfactant 1 | 5.00 | 7.00 |
| Surfactant 2 | ---- | 3.00 |
| Surfactant 3 | 5.00 | ---- |
| Fyrol CEF | 10.00 | 10.00 |
| Pelcat 9540-A | 3.40 | 3.25 |
| PMDETA | 0.20 | 0.20 |
| Tegostab B-8512 | 2.00 | 2.00 |
| Water | 0.50 | 0.50 |
| n-pentane | 22.50 | 22.30 |
| Total resin | 138.60 | 138.25 |
| Mondur 489, pphp | 191.71 | 191.27 |
| Index | 275 | 275 |
| Reactivity test (20° C, 8 sec. stir): | | |
| Cream time (sec) | 14 | 14 |
| Gel time (sec) | 42 | 43 |
| Cup density (kg/m³(lb./cm.ft)) | 28.4 (1.77) | 28.7 (1.79) |
| Cell structure | fine | fine |
| Resin viscosity (cP, 20° C) | 4540 | ----- |
| | | |
| Molded Foam Properties: | | |
| Core Density (kg/m³(lb./cm.ft)) | 30.0 (1.87) | ---- |
| Compressive Strength (kPa (psi)): | | |
| Parallel | 151.3 (21.94) | ---- |
| Perpendicular across | 99.1 (14.38) | ---- |
| Perpendicular down | 289.7 (42.02) | ----- |
| K Factor (w/m·k(BTn in/hr.sq.ft. °F)): | | |
| Initial | 0.022 (0.153) | ----- |
| 2 Months | 0.023 (0.161) | ---- |

The foams of Examples 24 and 25 showed fine, regular cell structure and normal overall appearance. The compressive strengths and K factors of Example 24 were typical of a commercially acceptable polyisocyanurate foam.

The present technology is now described in such full, clear, concise and exact terms as to enable a person skilled in the art to which it pertains, to practice the same.

## Claims

1. A polyol based resin blend comprising:
(a) a polyol, wherein the polyol comprises at least 50 % by weight of one or more aromatic polyester polyols based on the total weight of the polyol;
(b) a compatibilizing agent comprising an ethoxylate propoxylate surfactant produced by reacting propylene oxide and ethylene oxide with an initiator selected from the group consisting of compounds having one alkylene oxide active hydrogen atom and a C₁-C₆ aliphatic or alicyclic hydrocarbon group, compounds having one alkylene oxide active hydrogen atom and a C₆-C₁₀ aryl or alkylaryl hydrocarbon group, and combinations thereof; and
(c) a hydrocarbon blowing agent.

2. The resin blend of claim 1, wherein the compatibilizing agent further comprises an alkoxylated triglyceride adduct and/or an alkoxylated sorbitan ester adduct.

3. The resin blend of claim 2, wherein the alkoxylated sorbitan ester adduct is made from a sorbitan ester comprising a mono-, di-, or triester of sorbitol or sorbitan, or a mixture thereof, with a C₁₂-C₂₀ fatty acid or a mixture of C₁₂-C₂₀ fatty acids.

4. The resin blend of any one of claims 1 to 3, wherein the initiator is selected from the group consisting of C₁-C₆ aliphatic or alicyclic alcohols, phenol, C₁-C₄ alkyl phenols, and combinations thereof.

5. The resin blend of any one of claims 1 to 4, wherein the initiator comprises butanol.

6. The resin blend of any one of claims 1 to 5, wherein the blowing agent is selected from the group consisting of C₄-C₇ hydrocarbons and combinations thereof.

7. The resin blend of any one of claims 1 to 6, wherein the compatibilizing agent is present in an amount of from 2 to 30 % by weight based on the total weight of components (a) and (b).

8. The resin blend of any one of claims 1 to 7, wherein the hydrocarbon blowing agent is present in an amount of from 5 to 35 parts by weight per hundred parts of the total weight of components (a) and (b).

9. The resin blend of any one of claims 1 to 8, wherein for each mole of the initiator, at least 3 moles of propylene oxide and at least 1 mole of ethylene oxide are used.

10. The resin blend of any one of claims 1 to 9, wherein for each mole of the initiator, 10 to 100 moles of propylene oxide and 10 to 100 moles of ethylene oxide are used.

11. A polyurethane or polyisocyanurate foam comprising the reaction product of an isocyanate and the resin blend of any one of claims 1 to 10.

12. The foam of claim 11, wherein the resin blend comprises from 65 to 99 percent by weight of the polyol based on the total weight of the resin blend.

13. A method of making a polyol based resin blend comprising:
providing a polyol, wherein the polyol comprises at least 50 % by weight of one or more aromatic polyester polyols based on the total weight of the polyol;
providing a compatibilizing agent comprising an ethoxylate propoxylate surfactant produced by reacting propylene oxide and ethylene oxide with an initiator selected from the group consisting of compounds having one alkylene oxide active hydrogen atom and a C₁-C₆ aliphatic or alicyclic hydrocarbon group, compounds having one alkylene oxide active hydrogen atom and a C₆-C₁₀ aryl or alkylaryl hydrocarbon group, and combinations thereof;
providing a hydrocarbon blowing agent; and
blending the polyol, the compatibilizing agent, and the hydrocarbon blowing agent to form the resin blend.

14. A method of making a polyurethane or polyisocyanurate foam comprising:
providing an isocyanate;
providing a polyol, wherein the polyol comprises at least 50 % by weight of one or more aromatic polyester polyols based on the total weight of the polyol;
providing a compatibilizing agent comprising an ethoxylate propoxylate surfactant produced by reacting propylene oxide and ethylene oxide with an initiator selected from the group consisting of compounds having one alkylene oxide active hydrogen atom and a C₁-C₆ aliphatic or alicyclic hydrocarbon group, compounds having one alkylene oxide active hydrogen atom and a C₆-C₁₀ aryl or alkylaryl hydrocarbon group, and combinations thereof;
providing a hydrocarbon blowing agent;
making a mixture comprising the isocyanate, the polyol, the compatibilizing agent, and the hydrocarbon blowing agent; and
reacting the mixture to produce the polyurethane or polyisocyanurate foam.

15. The method of claim 14, wherein the isocyanate comprises a polyisocyanate.

16. The method of claim 14 or 15, wherein the mixture has an isocyanate index of from 100 to 400.

17. The method of any one of claims 13 to 16, wherein the compatibilizing agent further comprises an alkoxylated triglyceride adduct and/or an alkoxylated sorbitan ester adduct.

18. The method of any one of claims 13 to 17, wherein the initiator is selected from the group consisting of C₁-C₆ alcohols, phenol, C₁-C₄ alkyl phenols, and combinations thereof.

19. The method of any one of claims 13 to 18, wherein the initiator comprises butanol.

## Patentansprüche

1. Polyol-basierendes Harzgemisch, das umfasst:
(a) ein Polyol, wobei das Polyol mindestens 50 Gew.-% eines oder mehrerer aromatischer Polyesterpolyole basierend auf dem Gesamtgewicht des Polyols umfasst,
(b) ein Kompatibilisierungsmittel, das ein Ethoxylat-Propoxylat-Tensid umfasst, das durch Umsetzen von Propylenoxid und Ethylenoxid mit einem Starter hergestellt wird, der ausgewählt ist aus der Gruppe, bestehend aus Verbindungen mit einem Alkylenoxid-aktiven Wasserstoffatom und einer C₁-C₆-aliphatischen oder alicyclischen Kohlenwasserstoffgruppe, Verbindungen mit einem Alkylenoxid-aktiven Wasserstoffatom und einer C₆-C₁₀-Aryl- oder Alkylarylkohlenwasserstoffgruppe und Kombinationen davon, und
(c) ein Kohlenwasserstoff-Treibmittel.

2. Harzgemisch nach Anspruch 1, wobei das Kompatibilisierungsmittel ferner ein alkoxyliertes Triglyceridaddukt und/oder ein alkoxyliertes Sorbitanesteraddukt umfasst.

3. Harzgemisch nach Anspruch 2, wobei das alkoxylierte Sorbitanesteraddukt aus einem Sorbitanester, der einen Mono-, Di- oder Triester von Sorbitol oder Sorbitan oder ein Gemisch davon umfasst, mit einer C₁₂-C₂₀-Fettsäure oder einem Gemisch von C₁₂-C₂₀-Fettsäuren hergestellt wird.

4. Harzgemisch nach einem der Ansprüche 1 bis 3, wobei der Starter ausgewählt ist aus der Gruppe, bestehend aus C₁-C₆-aliphatischen oder alicyclischen Alkoholen, Phenol, C₁-C₄-Alkylphenolen und Kombinationen davon.

5. Harzgemisch nach einem der Ansprüche 1 bis 4, wobei der Starter Butanol umfasst.

6. Harzgemisch nach einem der Ansprüche 1 bis 5, wobei das Treibmittel ausgewählt ist aus der Gruppe, bestehend aus C₄-C₇-Kohlenwasserstoffen und Kombinationen davon.

7. Harzgemisch nach einem der Ansprüche 1 bis 6, wobei das Kompatibilisierungsmittel in einer Menge von 2 bis 30 Gew.-% basierend auf dem Gesamtgewicht der Komponenten (a) und (b) vorliegt.

8. Harzgemisch nach einem der Ansprüche 1 bis 7, wobei das Kohlenwasserstoff-Treibmittel in einer Menge von 5 bis 35 Gewichtsteilen pro 100 Teilen des Gesamtgewichts der Komponenten (a) und (b) vorliegt.

9. Harzgemisch nach einem der Ansprüche 1 bis 8, wobei für jedes Mol Starter mindestens 3 Mole Propylenoxid und mindestens 1 Mol Ethylenoxid verwendet werden.

10. Harzgemisch nach einem der Ansprüche 1 bis 9, wobei für jedes Mol Starter 10 bis 100 Mole Propylenoxid und 10 bis 100 Mole Ethylenoxid verwendet werden.

11. Polyurethan- oder Polyisocyanuratschaum, der das Reaktionsprodukt eines Isocyanats und des Harzgemisches nach einem der Ansprüche 1 bis 10 umfasst.

12. Schaum nach Anspruch 11, wobei das Harzgemisch 65 bis 99 Gew.-% des Polyols basierend auf dem Gesamtgewicht des Harzgemisches umfasst.

13. Verfahren zur Herstellung eines Polyol-basierenden Harzgemisches, das umfasst:
Bereitstellen eines Polyols, wobei das Polyol mindestens 50 Gew.-% eines oder mehrerer aromatischer Polyesterpolyole basierend auf dem Gesamtgewicht des Polyols umfasst,
Bereitstellen eines Kompatibilisierungsmittels, das ein Ethoxylat-Propoxylat-Tensid umfasst, das durch Umsetzen von Propylenoxid und Ethylenoxid mit einem Starter hergestellt wird, der ausgewählt ist aus der Gruppe, bestehend aus Verbindungen mit einem Alkylenoxid-aktiven Wasserstoffatom und einer C₁-C₆-aliphatischen oder alicyclischen Kohlenwasserstoffgruppe, Verbindungen mit einem Alkylenoxid-aktiven Wasserstoffatom und einer C₆-C₁₀-Aryl- oder Alkylarylkohlenwasserstoffgruppe und Kombinationen davon,
Bereitstellen eines Kohlenwasserstoff-Treibmittels und
Mischen des Polyols, des Kompatibilisierungsmittels und des Kohlenwasserstoff-Treibmittels, um das Harzgemisch auszubilden.

14. Verfahren zur Herstellung eines Polyurethan- oder Polyisocyanuratschaums, das umfasst:
Bereitstellen eines Isocyanats,
Bereitstellen eines Polyols, wobei das Polyol mindestens 50 Gew.-% eines oder mehrerer aromatischer Polyesterpolyole basierend auf dem Gesamtgewicht des Polyols umfasst,
Bereitstellen eines Kompatibilisierungsmittels, das ein Ethoxylat-Propoxylat-Tensid umfasst, das durch Umsetzen von Propylenoxid und Ethylenoxid mit einem Starter hergestellt wird, der ausgewählt ist aus der Gruppe, bestehend aus Verbindungen mit einem Alkylenoxid-aktiven Wasserstoffatom und einer C₁-C₆-aliphatischen oder alicyclischen Kohlenwasserstoffgruppe, Verbindungen mit einem Alkylenoxid-aktiven Wasserstoffatom und einer C₆-C₁₀-Aryl- oder Alkylarylkohlenwasserstoffgruppe und Kombinationen davon,
Bereitstellen eines Kohlenwasserstoff-Treibmittels,
Herstellen eines Gemisches, das das Isocyanat, das Polyol, das Kompatibilisierungsmittel und das Kohlenwasserstoff-Treibmittel umfasst, und
Umsetzen des Gemisches, um den Polyurethan- oder Polyisocyanuratschaum herzustellen.

15. Verfahren nach Anspruch 14, wobei das Isocyanat ein Polyisocyanat umfasst.

16. Verfahren nach Anspruch 14 oder 15, wobei das Gemisch einen Isocyanatindex von 100 bis 400 aufweist.

17. Verfahren nach einem der Ansprüche 13 bis 16, wobei das Kompatibilisierungsmittel ferner ein alkoxyliertes Triglyceridaddukt und/ oder ein alkoxyliertes Sorbitanesteraddukt umfasst.

18. Verfahren nach einem der Ansprüche 13 bis 17, wobei der Starter ausgewählt ist aus der Gruppe, bestehend aus C₁-C₆-Alkoholen, Phenol, C₁-C₄-Alkylphenolen und Kombinationen davon.

19. Verfahren nach einem der Ansprüche 13 bis 18, wobei der Starter Butanol umfasst.

## Revendications

1. Mélange de type résine à base de polyol, comprenant:
(a) un polyol, tandis que le polyol comprend au moins 50% en poids d'un ou plusieurs polyester polyols aromatiques sur la base du poids total du polyol;
(b) un agent compatibilisant comprenant un tensioactif de type éthoxylate propoxylate produit par réaction d'oxyde de propylène et d'oxyde d'éthylène avec un initiateur choisi dans le groupe consistant en les composés ayant un atome d'hydrogène actif d'oxyde d'alkylène et un groupe hydrocarboné aliphatique ou alicyclique en C₁-C₆, les composés ayant un atome d'hydrogène actif d'oxyde d'alkylène et un groupe hydrocarboné aryle ou alkylaryle en C₆-C₁₀, et des combinaisons de ceux-ci; et
(c) un agent d'expansion hydrocarboné.

2. Mélange de type résine selon la revendication 1, dans lequel l'agent compatibilisant comprend en outre un produit d'addition de type triglycéride alcoxylé et un produit d'addition de type ester de sorbitan alcoxylé.

3. Mélange de type résine selon la revendication 2, dans lequel le produit d'addition de type ester de sorbitan alcoxylé est obtenu à partir d'un ester de sorbitan comprenant un mono-, di-, ou triester de sorbitol ou de sorbitan, ou un mélange de ceux-ci, avec un acide gras en C₁₂-C₂₀ ou un mélange d'acides gras en C₁₂-C₂₀.

4. Mélange de type résine selon l'une quelconque des revendications 1 à 3, dans lequel l'initiateur est choisi dans le groupe consistant en alcools aliphatiques ou alicycliques en C₁-C₆, phénol, alkyl(en C₁-C₄) phénols, et leurs combinaisons.

5. Mélange de type résine selon l'une quelconque des revendications 1 à 4, dans lequel l'initiateur comprend du butanol.

6. Mélange de type résine selon l'une quelconque des revendications 1 à 5, dans lequel l'agent d'expansion est choisi dans le groupe consistant en les hydrocarbures en C₄-C₇ et leurs combinaisons.

7. Mélange de type résine selon l'une quelconque des revendications 1 à 6, dans lequel l'agent compatibilisant est présent en une quantité de 2 à 30% en poids sur la base du poids total des composants (a) et (b).

8. Mélange de type résine selon l'une quelconque des revendications 1 à 7, dans lequel l'agent d'expansion hydrocarboné est présent en une quantité de 5 à 35 parties en poids pour cent parties du poids total des composants (a) et (b).

9. Mélange de type résine selon l'une quelconque des revendications 1 à 8, dans lequel pour chaque mole de l'initiateur, au moins 3 moles d'oxyde de propylène et au moins 1 mole d'oxyde d'éthylène sont utilisées.

10. Mélange de type résine selon l'une quelconque des revendications 1 à 9, dans lequel pour chaque mole de l'initiateur, 10 à 100 moles d'oxyde de propylène et 10 à 100 moles d'oxyde d'éthylène sont utilisées.

11. Matière expansée de polyuréthane ou de polyisocyanurate comprenant le produit de réaction d'un isocyanate et du mélange de type résine selon l'une quelconque des revendications 1 à 10.

12. Matière expansée selon la revendication 11, dans laquelle le mélange de type résine comprend de 65 à 99 pour cent en poids du polyol sur la base du poids total du mélange de type résine.

13. Procédé pour l'obtention d'un mélange de type résine à base de polyol, comprenant:
la fourniture d'un polyol, tandis que le polyol comprend au moins 50% en poids d'un ou plusieurs polyester polyols aromatiques sur la base du poids total du polyol;
la fourniture d'un agent compatibilisant comprenant un tensioactif de type éthoxylate propoxylate produit par réaction d'oxyde de propylène et d'oxyde d'éthylène avec un initiateur choisi dans le groupe consistant en les composés ayant un atome d'hydrogène actif d'oxyde d'alkylène et un groupe hydrocarboné aliphatique ou
alicyclique en C₁-C₆, les composés ayant un atome d'hydrogène actif d'oxyde d'alkylène et un groupe hydrocarboné aryle ou alkylaryle en C₆-C₁₀, et des combinaisons de ceux-ci;
la fourniture d'un agent d'expansion hydrocarboné; et
le mélange du polyol, de l'agent compatibilisant et de l'agent d'expansion hydrocarboné pour former le mélange de type résine.

14. Procédé pour l'obtention d'une matière expansée de polyuréthane ou de polyisocyanurate, comprenant:
la fourniture d'un isocyanate;
la fourniture d'un polyol, tandis que le polyol comprend au moins 50% en poids d'un ou plusieurs polyester polyols aromatiques sur la base du poids total du polyol;
la fourniture d'un agent compatibilisant comprenant un tensioactif de type éthoxylate propoxylate produit par réaction d'oxyde de propylène et d'oxyde d'éthylène avec un initiateur choisi dans le groupe consistant en les composés ayant un atome d'hydrogène actif d'oxyde d'alkylène et un groupe hydrocarboné aliphatique ou
alicyclique en C₁-C₆, les composés ayant un atome d'hydrogène actif d'oxyde d'alkylène et un groupe hydrocarboné aryle ou alkylaryle en C₆-C₁₀, et des combinaisons de ceux-ci;
la fourniture d'un agent d'expansion hydrocarboné;
la réalisation d'un mélange comprenant l'isocyanate, le polyol, l'agent compatibilisant, et l'agent d'expansion hydrocarboné; et
la réaction du mélange pour produire la matière expansée de polyuréthane ou de polyisocyanurate.

15. Procédé selon la revendication 14, dans lequel l'isocyanate comprend un polyisocyanate.

16. Procédé selon la revendication 14 ou 15, dans lequel le mélange a un indice d'isocyanate de 100 à 400.

17. Procédé selon l'une quelconque des revendications 13 à 16, dans lequel l'agent compatibilisant comprend en outre un produit d'addition de type triglycéride alcoxylé et/ou un produit d'addition de type ester de sorbitan alcoxylé.

18. Procédé selon l'une quelconque des revendications 13 à 17, dans lequel l'initiateur est choisi dans le groupe consistant en alcools en C₁-C₆, phénol, alkyl(en C₁-C₄) phénols, et leurs combinaisons.

19. Procédé selon l'une quelconque des revendications 13 à 18, dans lequel l'initiateur comprend du butanol.
